# EUROPEAN PATENT APPLICATION

(11) **EP 4 207 034 A1**
(43) Date of publication of application: **05.07.2023**
(21) Application number: 21861460.0
(22) Date of filing: 23.08.2021
(51) Int. Cl.: G06Q 30/06, B41J 29/38, G06F 3/12

(54) **PRINTER SYSTEM**

(30) Priority: 25.08.2020 JP 2020141589
(71) Applicant: Sato Holdings Kabushiki Kaisha, Tokyo 108-0023 (JP)
(72) Inventor: YAMADA Noriyasu, Tokyo 108-0023 (JP); HARA Shogo, Tokyo 108-0023 (JP)
(74) Representative: Grünecker Patent- und Rechtsanwälte PartG mbB
(86) International application number: PCT/JP2021/030709
(87) International publication number: WO 2022/045034

(57) **Abstract**

A printer system 10 includes: a printer 14 that acquires and transmits, to a management server 12, identification information for identifying a customer and that also acquires, from the management server 12, and outputs recommendation information for the customer; and the management server 12 that generates and transmits, to the printer 14, recommendation information including position information, based on at least one of attribute information or action history information of a customer identified by identification information acquired from the printer 14.

## Description

### TECHNICAL FIELD

The present invention relates to a printer system.

### BACKGROUND ART

In retail stores or other stores, printers for issuing coupons for customers are used. For example, a discount coupon for a specific product may be issued when the membership information of a customer purchasing a product or the bar code of a product being purchased is read at a cash register (see Patent Literature 1, for example).

### PRIOR ART REFERENCE

### PATENT LITERTURE

Patent Literature 1: Japanese Unexamined Patent Application Publication No. 2012-076393

### SUMMARY OF INVENTION

### TECHNICAL PROBLEM

Discount coupons and other recommendations may be sometimes provided for products familiar to a customer and may be sometimes provided for products unfamiliar to the customer. From the sales side, it is desirable to suggest a product that a customer does not usually purchase and thereby lead to the customer's purchase behavior. However, in the case of a product that the customer does not usually purchase, there may be a reason such as not knowing where the product is sold, which may not lead to actual purchase behavior.

An illustrative purpose of one embodiment of the present invention is to provide a printer system that can output more favorable recommendation information.

### SOLUTION TO PROBLEM

A printer system according to one embodiment of the present invention includes: a printer that acquires and transmits, to a server, identification information for identifying a customer and that also acquires, from the server, and outputs recommendation information for the customer; and a server that generates and transmits, to the printer, recommendation information including position information, based on at least one of attribute information or action history information of a customer identified by identification information acquired from the printer.

A program according to another embodiment of the present invention causes a computer to implement: acquiring, from a printer, identification information for identifying a customer; generating recommendation information including position information, based on at least one of attribute information or action history information of a customer identified by the acquired identification information; and transmitting the generated recommendation information to the printer.

A program according to yet another embodiment of the present invention causes a computer to implement: acquiring and transmitting, to a server, identification information for identifying a customer; and acquiring, from the server, and outputting recommendation information that includes position information for the customer.

### ADVANTAGEOUS EFFECTS OF INVENTION

According to an embodiment of the present invention, more favorable recommendation information can be output from a printer.

### BRIEF DESCRIPTION OF DRAWINGS

FIG. 1 is a block diagram that schematically shows a functional configuration of a printer system according to an embodiment;
FIG. 2 is a diagram that shows an example of a coupon output by a printer;
FIG. 3 is a diagram that schematically shows an output selection screen for recommendation information;
FIG. 4 is a sequential diagram that shows an example of the operation performed by the printer system; and
FIG. 5 is a sequential diagram that shows another example of the operation performed by the printer system.

### DESCRIPTION OF EMBODIMENTS

In the following, a mode for carrying out the present invention will be described in detail with reference to the drawings. Like reference characters denote like elements in the description, and repetitive description will be omitted as appropriate.

An overview of the present embodiment will be described. The present embodiment relates to a printer system that includes a server and a printer. The printer acquires identification information for identifying a customer and transmits the identification information to the server, and the printer also acquires recommendation information for the customer from the server and outputs the recommendation information. Based on at least one of attribute information or action history information of a customer identified by the identification information acquired from the printer, the server generates the recommendation information including position information and transmits the recommendation information to the printer. The recommendation information is information for proposing or recommending a product or service to a customer. The recommendation information is provided to a customer, for example, in the form of a coupon output from the printer.

In the present embodiment, the printer system not only proposes a product or service but also presents position information regarding a position where the product or service can be obtained, thereby prompting a customer to move to the place where the product or service can be obtained in accordance with the recommendation information. As a result, compared to the case of presenting recommendation information that does not include the position information, the effect of prompting a customer's actual behavior, such as purchasing a product or service based on the recommendation information, can be expected. From the sales side, which issues the recommendation information, an increase in sales can be expected through the presentation of favorable recommendation information. From the customer side, which receives the recommendation information, since the position information is clearly indicated, the burden of going to see the recommended product or service is reduced, so that the customer can utilize the recommendation information more easily.

The printer system according to the present embodiment can be used in large-scale commercial facilities, such as department stores and shopping malls. In a commercial facility, multiple stores are provided, and a printer is installed in at least one of the multiple stores. The printer may also be disposed outside the stores and may be installed at the entrance or exit of the commercial facility or at an information center. When a customer card commonly used within the commercial facility is held over the printer, recommendation information appropriate for the customer is generated by the server, and the recommendation information including the position information is output from the printer. The recommended product or service may be provided by the store where the printer for outputting the recommendation information is installed, or by another store.

In the following, the present embodiment will be detailed with an example describing use in a commercial facility where multiple stores are provided.

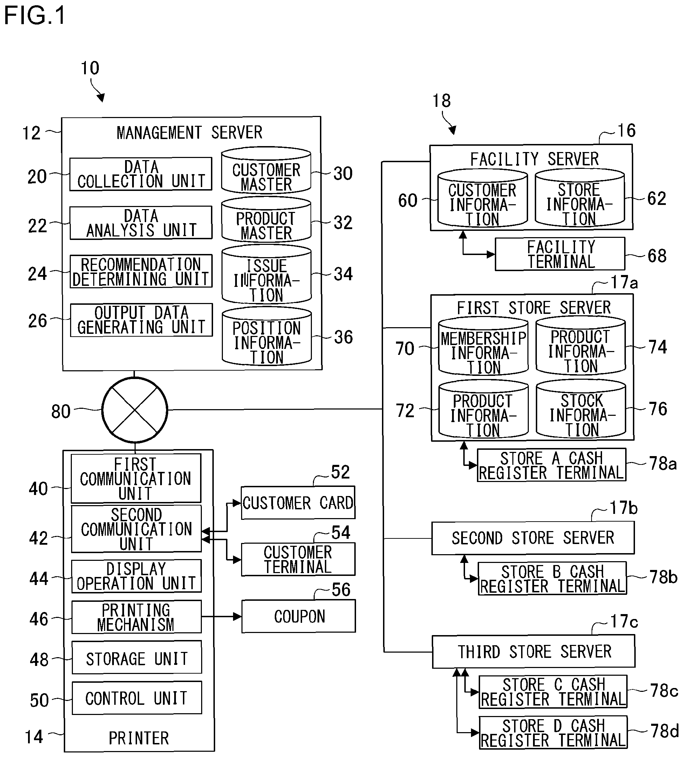

FIG. 1 is a block diagram that schematically shows a functional configuration of a printer system 10 according to an embodiment. Each functional block shown in the present embodiment can be implemented by an element such as a CPU or memory of a computer or by a mechanism in terms of hardware, and by a computer program or the like in terms of software. FIG. 1 illustrates functional blocks implemented by coordination of those components. Therefore, it will be understood by those skilled in the art that these functional blocks may be implemented in a variety of forms by combinations of hardware and software.

The printer system 10 includes a management server 12 and a printer 14. The management server 12 and the printer 14 are connected to a network 80 such as the Internet. The printer 14 acquires, from a customer card 52 or customer terminal 54, identification information for identifying a customer and transmits the identification information to the management server 12. The management server 12 generates recommendation information for the customer identified by the identification information acquired from the printer 14 and transmits the recommendation information to the printer 14. The printer 14 then outputs the recommendation acquired from the management server 12, as a coupon 56.

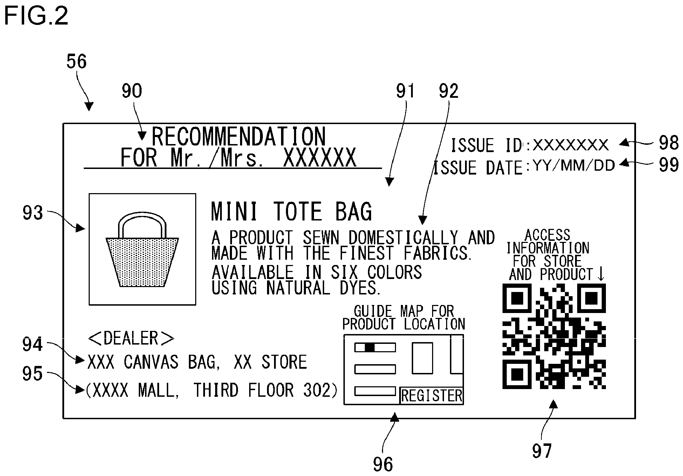

FIG. 2 is a diagram that shows an example of the coupon 56 output by the printer 14. In FIG. 2, a bag is set as a product to be recommended. The coupon 56 is printed with a name 90 of a recommendation target customer to whom the recommendation is directed, and with a product name 91, product description 92, and product image 93 of the product to be recommended. The coupon 56 is also printed with a store name 94 of the store that provides the product to be recommended, a store position 95 within a facility, and a map image 96 that indicates a detailed position of the product within the store. The coupon 56 is also printed with a two-dimensional code 97 used to view detailed information for access to the store or product, and the detailed information can be viewed using the customer terminal 54, such as a smartphone. The coupon 56 is also printed with an issue ID 98 for identifying the recommendation information, and an issue date 99 of the coupon 56. The coupon 56 may be further printed with benefit information, such as the discount amount or discount rate for a purchase, and a novelty gift or points given for a visit to the store.

The management server 12 generates the recommendation information based on information acquired from a facility server 16 or multiple store servers 17a, 17b, and 17c shown in FIG. 1. The facility server 16 is an external server prepared separately from the management server 12 and manages information regarding a commercial facility (also simply referred to as a facility) that houses multiple stores. The store servers 17a-17c are external servers prepared separately from the management server 12 and are also dedicated servers prepared respectively for stores within a facility or for operating entities of stores.

In the following, before the configurations of the management server 12 and the printer 14 are described in detail, the facility server 16 and the multiple store servers 17a-17c will be described. Hereinafter, the facility server 16 and multiple store servers 17a-17c may be collectively referred to as "external servers 18".

The facility server 16 stores customer information 60 and store information 62. The customer information 60 includes data regarding customers who use the facility and includes, based on a customer ID as identification information for identifying a customer, basic information such as the name and address of the customer, and attribute information such as the age, gender, occupation, family structure, hobbies, and interests of the customer. A customer registered in the customer information 60 is given a customer card 52, on which the customer ID is written. The customer information 60 may include data regarding points that can be used in the entire facility and may include action history information on each customer's actions within the facility, such as acquisition history or use history of the points. The points that can be used in the entire facility may be given when a product or service is purchased at a store within the facility, for example.

The store information 62 includes data regarding multiple stores provided in the facility. The store information 62 includes data based on a store ID for identifying a store, such as the store name, type of business, and position of the store within the facility. The store information 62 may also include data indicating the affiliation of each store and may also include data regarding the operating entity of each store and data regarding the capital relationship of the operating entity of each store. For example, the store information 62 may indicate that the operating entity of a store A and the operating entity of a store B are companies in the same group, or that the operating entity of a store C and a store D is the same.

The facility server 16 is connected to a facility terminal 68 installed within the facility. The facility terminal 68 is installed in a location different from the stores, such as the entrance or exit of the facility, an information center, or an event space. The facility terminal 68 provides a map of the facility, information on the stores within the facility, and information on events within the facility, for example. The facility terminal 68 may also present, to each customer, information on the remaining amount of points that can be used in the facility.

The store servers 17a-17c manage information on the stores A-D within the facility. A first store server 17a is a dedicated server for the store A and manages information regarding the store A. A second store server 17b is a dedicated server for the store B and manages information regarding the store B. A third store server 17c is a dedicated server for the operating entity of the store C and store D and manages information regarding the store C and store D.

In the stores A-D, cash register terminals 78a, 78b, 78c, and 78d are respectively installed. The cash register terminals 78a-78d are connected with the corresponding store servers 17a-17c. The cash register terminals 78a-78d acquire information regarding a customer purchasing a product and information regarding a product being purchased and transmit the information to the store servers 17a-17c. When recommendation information such as the coupon 56 is used at the time of purchase of a product, the cash register terminals 78a-78d acquire information regarding the recommendation information thus used and transmit the information to the store servers 17a-17c.

The first store server 17a stores membership information 70, product information 72, history information 74, and stock information 76. The membership information 70 includes data regarding customers who use the store A. The membership information 70 includes basic information and attribute information of each member, based on a member ID. The member ID may be customer identification information that is different from the customer ID and uniquely assigned by the store A or may be the customer ID in common managed by the facility server 16. When the member ID uniquely assigned by the store A is used, the membership information 70 may include the customer IDs and the member IDs related to each other.

The product information 72 includes product data regarding products provided by the store A. The product information 72 includes data, such as the product name, the product type, a product image, and detailed product description, based on a product ID. The product information 72 may also include service data regarding services provided by the store A or may be constituted only by the service data. The service data includes data, such as the service name, the service type, a service image, and detailed service description, based on a service ID.

The history information 74 includes data indicating history of customers' actions in the store A. It can be said that the history information 74 includes sales data of the store A and history data of customers' purchases in the store A. The history information 74 includes, for example, the member ID or customer ID for identifying a customer, the product ID for identifying a product purchased by a customer, and detailed information, such as the date and time of purchase, the amount of purchase, and the number of purchased products. The history information 74 may also include service purchase history data or may be constituted only by the service purchase history data. The history information 74 may also include information regarding whether or not recommendation information, such as the coupon 56, has been used at the time of purchase of a product or service and may also include an issue ID for identifying used recommendation information. The history information 74 may include history data of customers' actions different from purchases of products or services and may include data indicating actions that are not directly related to sales, such as customers' visiting the store A, customers' making reservations at the store A, and providing trial products to customers at the store A. It can be said that the history information 74 is "action history information" that records customers' various actions in the store A.

The stock information 76 is data for managing the stock of products provided by the store A. The stock information 76 includes data indicating the number and position of products in stock, based on the product ID. When a product is displayed in the store, the stock position data may include data indicating a detailed position of the display location, such as a shelf number for identifying the display shelf of the product, or the top, middle, or bottom of the display shelf. When a product in stock is stored in a backroom of the store, data indicating a detailed position of the storage location may be included, such as a shelf number for identifying the storage shelf in the backroom, or the top, middle, or bottom of the storage shelf.

The first store server 17a may store service schedule information, in addition to or in place of the stock information 76. The service schedule information may include detailed data, such as scheduled time when a service is provided, whether or not the service is reserved at the scheduled time, and the location where the service is provided, based on the service ID. By referring to the service schedule information, available scheduled time when a service is available can be identified.

Although not illustrated, the second store server 17b and the third store server 17c also store information similar to that the first store server 17a stores. The number of store servers used in the printer system 10 is not particularly limited, and store servers may be provided considering the number of stores or the number of operating entities of stores that use the printer system 10.

There will now be described the functional configuration of the management server 12. The management server 12 includes a data collection unit 20, a data analysis unit 22, a recommendation determining unit 24, and an output data generating unit 26. The management server 12 stores a customer master 30, a product master 32, issue information 34, and position information 36.

The customer master 30 manages customer identification information and attribute information of recommendation target customers. The customer master 30 is generated based on the customer information 60 acquired from the facility server 16. The customer identification information may be the customer ID used in the customer information 60 or may be another ID. The customer master 30 may also include information based on the membership information 70 in the store servers 17a-17c.

The product master 32 manages information on products and services to be recommended. The product master 32 is generated based on the product information 72 acquired from the multiple store servers 17a-17c. Identification information of a product or service in the product master 32 may be the product ID or service ID used in the product information 72 or may be another ID.

The issue information 34 includes issuance history data of recommendation information generated by the management server 12 and output from the printer 14. The issue information 34 includes, for example, information printed on the coupon 56 shown in FIG. 2 and also includes the issue date and time, customer ID, product ID, store ID, and information indicating a detailed position of the product, based on the issue ID. The issue information 34 may include, as the status of the coupon 56, a flag indicating one of unissued, issued, or used, for example.

The position information 36 manages position information included in the recommendation information. The position information 36 includes data indicating the position of a store where a product or service can be obtained, and a detailed position within the store where the product or service can be obtained. The position information 36 may include data used to generate a map image to be printed on the coupon 56 and may also include map data of a facility, map data of each store, and the like.

The data collection unit 20 collects data necessary for generation of the recommendation information. The data collection unit 20 collects various data from the external servers 18. The data collection unit 20 may collect data from a server different from the facility server 16 or the store servers 17a-17c. The data collection unit 20 may acquire weather information, news information, trend information, and the like from arbitrary web pages on the Internet. For example, the data collection unit 20 may acquire information on topics that rank high in search rankings on a particular search site.

The data analysis unit 22 analyzes data acquired by the data collection unit 20 to generate a recommendation engine for generating recommendation information. The data analysis unit 22 generates the recommendation engine by machine learning using the history information 74 on the multiple store servers 17a-17c as learning data, for example. The data analysis unit 22 may use a so-called collaborative filtering technology to classify customers based on the similarity of history information and generate the recommendation engine that outputs recommendation information based on the history information of customers in the same category. The data analysis unit 22 may use, as the learning data, the action history information on customers' actions within the facility, included in the customer information 60 stored on the facility server 16. The data analysis unit 22 may also classify customers based on the attribute information of the customers. The data analysis unit 22 may sequentially update the recommendation engine based on the latest action history information of customers. The method of generating the recommendation engine and information used to generate the recommendation engine is not particularly limited, and an arbitrary method and arbitrary information may be combined and used as appropriate.

The data analysis unit 22 may also use the issue information 34 as the learning data and generate the recommendation engine by using the correlation between the issued recommendation information and the action history information of customers. For example, the recommendation priority may be raised for products with high probability of purchase using the recommendation information. Also, the recommendation priority may be raised for products of which the time from the issuance timing of the recommendation information to the timing of a customer's action associated with the recommendation information is short. The customer's action associated with the recommendation information may be, for example, purchasing the recommended product or service, visiting the recommended store, or the like. Meanwhile, for products for which there is no history of customers' actions in response to issued recommendation information or there is no history of customers' purchases in response to the recommendation information, the recommendation priority may be lowered. The analysis based on recommendation issuance history may be performed for all the customers, for each customer category, or for each customer. For example, history data of use of recommendation information by each customer may be used to analyze the hobbies and interests of each customer and determine the category of each customer.

Using the recommendation engine generated by the data analysis unit 22, the recommendation determining unit 24 determines a product or service to be recommended. Upon acquiring, from the printer 14, identification information for identifying a recommendation target customer, the recommendation determining unit 24 extracts a product or service to be recommended to the customer. For example, the recommendation determining unit 24 identifies the category of a recommendation target customer and extracts a product or service to be recommended based on the history information of other customers in the same category and the history information of the recommendation target customer. The recommendation determining unit 24 extracts, for example, a product or service that has been purchased by another customer in the same category but has not been purchased by the recommendation target customer. The recommendation determining unit 24 may extract a product or service to be recommended based on the history information of the same customer. For example, the recommendation determining unit 24 may extract a product or service that the recommendation target customer has frequently purchased or may extract a product or service that the recommendation target customer has purchased in the past but has not purchased in a recent predetermined period of time (such as one month, six months, or one year).

The recommendation determining unit 24 identifies a store that can provide the extracted product or service. The recommendation determining unit 24 may determine a store to be recommended based on the stock information 76 on the store servers 17a-17c. For example, a store where there is actually the stock and customers can immediately purchase the product may be set as the store to be recommended. The recommendation determining unit 24 may determine the store to be recommended based on the installation position of the printer 14. For example, a store located near the installation position of the printer 14 may be set as the store to be recommended. The recommendation determining unit 24 may determine the store to be recommended based on the history information 74. For example, a store with a low rate of utilization by the recommendation target customer or a store with a high rate of utilization by another customer who is in the same category as the recommendation target customer may be set as the store to be recommended. Also, based on the affiliation of each store, the recommendation determining unit 24 may set, as the store to be recommended, a store affiliated with the store where the printer 14 is installed.

The recommendation determining unit 24 may set, as the product or service to be recommended, a product or service provided by the store where the printer 14 is installed. The recommendation determining unit 24 may also set, as the product or service to be recommended, a product or service provided by another store different from the store where the printer 14 is installed. For example, a product of the store B may be recommended using the printer 14 installed in the store A. The recommendation determining unit 24 may set, as the product or service to be recommended, a product or service that is the same as that provided by the store where the printer 14 is installed. For example, a clothing item may be recommended using the printer 14 installed in a store that deals in clothing. The "same product or service" as used herein may mean that the product ID or service ID is the same or may mean that the type of the product or service is the same. Also, the recommendation determining unit 24 may set, as the product or service to be recommended, a product or service that is different from that provided by the store where the printer 14 is installed. For example, a cosmetic item may be recommended using the printer 14 installed in a store that deals in clothing.

The output data generating unit 26 generates the recommendation information to be transmitted to the printer 14. The output data generating unit 26 also generates print data used to print the coupon 56 shown in FIG. 2. The output data generating unit 26 generates the print data by, for example, embedding characters and images into template data in which the print layout of the coupon 56 is defined. The name 90 of a customer to be printed on the coupon 56 is acquired from the customer information 60. Also, the product name 91, product description 92, and product image 93 to be printed on the coupon 56 are acquired from the product information 72 stored on the store servers 17a-17c, based on the store ID and the product ID determined by the recommendation determining unit 24. Further, the store name 94 and store position 95 to be printed on the coupon 56 are acquired from the store information 62 stored on the facility server 16, based on the store ID determined by the recommendation determining unit 24.

The output data generating unit 26 generates the map image 96 to be printed on the coupon 56 based on the position information 36. The map image 96 printed on the coupon 56 is a guide map for indicating a position where a product or service can be obtained. The guide map may indicate a position where the product or service can be obtained within a store. The guide map may indicate the display location of the product within the store or may indicate a route from an entrance of the store to the display location of the product. The guide map may indicate the storage location of the stock of the product within the store, for a salesperson who is shown the coupon 56. The guide map may indicate, as a detailed position within a facility, the position of the store or a route to the store within the facility. The guidance map may indicate a route from an entrance or exit of the facility to the store or may indicate a route from the store where the printer 14 is installed to the store to be recommended. The guide map may indicate the position of the facility or may indicate a route to the facility from the nearest station of the facility or a major road around the facility. The output data generating unit 26 may generate the map image 96 by combining at least two of a guide map indicating the position of the facility, a guide map indicating the position of the store, and a guide map indicating the position of the product or service within the store, as appropriate.

The output data generating unit 26 also generates the two-dimensional code 97 to be printed on the coupon 56, based on address information of a website for displaying access information of the store and product. The two-dimensional code 97 is embedded with identification information, such as an issue ID for identifying the coupon 56, so that detailed information associated with the issue ID can be viewed on the website. The output data generating unit 26 may generate display data of the website to be displayed on the customer terminal 54 or the like.

The output data generating unit 26 may also generate screen data used to display the recommendation information on the screen of the printer 14. The screen data may include the same content as the print data or may include content different from the print data. The screen data may include video data or information indicating where the video data is stored, and a video associated with the recommendation may be played on the screen of the printer 14. The recommendation information generated by the output data generating unit 26 is stored as the issue information 34 on the management server 12.

There will now be described the functional configuration of the printer 14. The printer 14 includes a first communication unit 40, a second communication unit 42, a display operation unit 44, a printing mechanism 46, a storage unit 48, and a control unit 50.

The first communication unit 40 connects with the management server 12 via the network 80. The first communication unit 40 may be configured to wirelessly connect to the network 80 or may be configured to connect to the network 80 by wired means. The first communication unit 40 transmits customer identification information to the management server 12. The first communication unit 40 acquires recommendation information for the customer from the management server 12.

The second communication unit 42 communicates with the customer card 52 and the customer terminal 54 to acquire customer identification information. The second communication unit 42 wirelessly connects with the customer card 52 and the customer terminal 54 via Near field communication (NFC) to acquire the customer identification information. The printer 14 may be connected with a bar code reader (not illustrated) and acquire customer identification information read by the bar code reader. The second communication unit 42 may transmit recommendation information to the customer card 52 and the customer terminal 54.

The display operation unit 44 is constituted by a touch panel display and enables screen display and input operation for operating the printer 14. The display operation unit 44 may be configured to include a display unit and an operation unit separately, and the operation unit constituted by buttons and switches may be disposed around the display unit constituted by a liquid crystal display or the like. The display operation unit 44 may also include a microphone for receiving voice input operations from a user, or a camera for receiving input operations by means of gestures from a user.

The printing mechanism 46 prints the coupon 56. The printing mechanism 46 includes an advancing mechanism for advancing paper, and a printing head for printing characters and images on the paper. The printing mechanism 46 may also include a cutting mechanism for cutting the printed paper into predetermined size.

The storage unit 48 stores data acquired by the printer 14. The storage unit 48 stores the recommendation information acquired from the management server 12. The storage unit 48 is constituted by a semiconductor storage device such as a flash memory, or a magnetic storage device such as a hard disk.

The control unit 50 controls the overall operation of the printer 14. Upon acquisition of customer identification information through the second communication unit 42, the control unit 50 transmits to the management server 12 a command for requesting recommendation information, together with the customer identification information thus acquired. The control unit 50 may transmit the command to the management server 12 upon input operation performed on the display operation unit 44.

Upon acquisition of recommendation information from the management server 12, the control unit 50 outputs the recommendation information thus acquired. The control unit 50 may output the recommendation information through screen display on the display operation unit 44, through printing by the printing mechanism 46, or through data transmission to the customer card 52 or the customer terminal 54. Upon outputting the recommendation information, the control unit 50 notifies the management server 12 of completion of the outputting of the recommendation information.

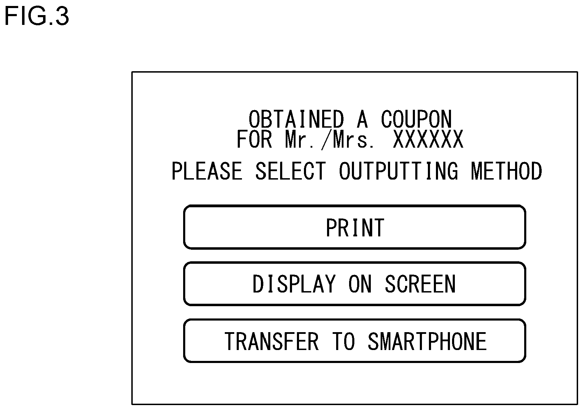

FIG. 3 is a diagram that schematically shows an output selection screen for the recommendation information. Upon acquisition of the recommendation information, the control unit 50 may display the screen shown in FIG. 3 on the display operation unit 44. The screen shown in FIG. 3 indicates that the recommendation information for a specific customer has been acquired and also displays three options for the outputting method of "PRINT", "DISPLAY ON SCREEN", and "TRANSFER TO SMARTPHONE". When "PRINT" is selected, the control unit 50 operates the printing mechanism 46 to print the coupon 56. When "DISPLAY ON SCREEN" is selected, the control unit 50 displays the recommendation information on the display operation unit 44. The control unit 50 may set a video to be played. When "TRANSFER TO SMARTPHONE" is selected, the control unit 50 transmits the recommendation information to the customer terminal 54 via the second communication unit 42. The customer terminal 54 that has acquired the recommendation information may be capable of displaying the detailed content of the recommendation information through a browser or a dedicated application or may be capable of displaying a two-dimensional code through which the recommendation information can be used.

The recommendation information output for a customer may be used at the time of purchase of a product or service at a store. For example, when a customer presents the coupon 56 at the cash register of the store A, the two-dimensional code 97 is read by the bar code reader of the cash register terminal 78a in the store A. Accordingly, the use history of the coupon 56 is recorded in the history information 74 on the first store server 17a. At the cash register terminal 78a of the store A, the recommendation information may be read from the customer card 52 or the customer terminal 54. Also, based on the customer ID acquired by the cash register terminal 78a of the store A, the first store server 17a may inquire of the management server 12 as to recommendation information. When there is recommendation information available in the store A, the management server 12 may transmit the recommendation information to the first store server 17a.

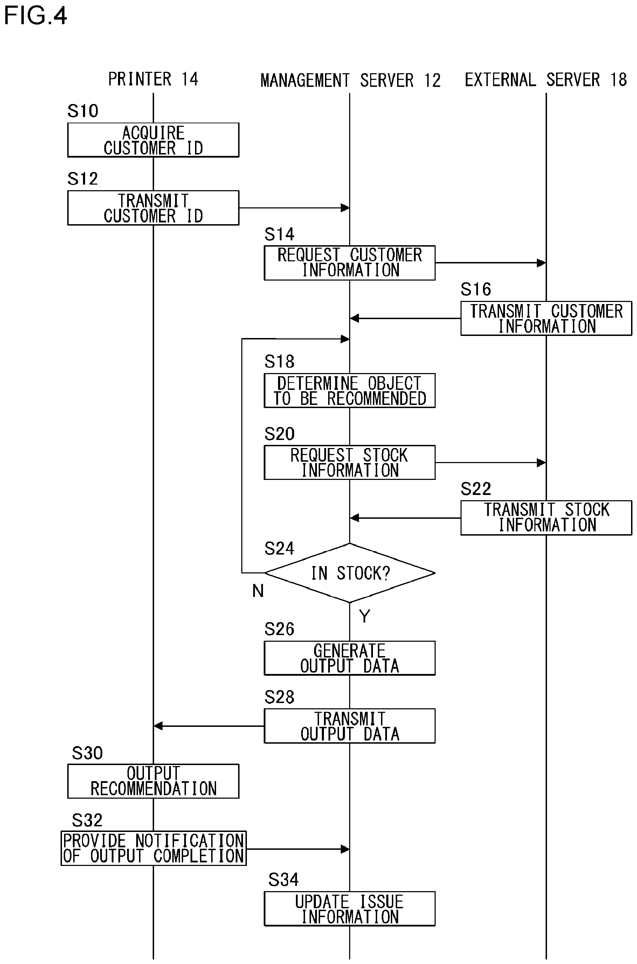

There will now be described the flow of operation performed by the printer system 10. FIG. 4 is a sequential diagram that shows an example of the operation performed by the printer system 10 and shows the flow of processing from the acquisition of a customer ID at the printer 14 to the output of recommendation information at the printer 14. In the sequential diagram of FIG. 4, the facility server 16 and multiple store servers 17a-17c are collectively referred to as "external servers 18".

The printer 14 acquires a customer ID for identifying a customer from the customer card 52 or the customer terminal 54 (S10) and transmits the customer ID thus acquired to the management server 12 (S12). The management server 12 requests, from an external server 18, information regarding the customer identified by the acquired customer ID (S14). The external server 18 transmits, to the management server 12, basic information, attribute information, and action history information, for example, of the customer, as the requested information regarding the customer (S16). Based on the acquired information regarding the customer, the management server 12 determines an object to be recommended to the customer (S18). For example, the management server 12 determines a product to be recommended, and a store that provides the product.

The management server 12 requests, from the external server 18, stock information of the product to be recommended (S20). The external server 18 transmits the requested stock information of the product to the management server 12 (S22). When there is the stock of the product to be recommended (Y at S24), the management server 12 generates output data for presenting, to the customer, the product and store set as a product and store to be recommended (S26) and transmits the output data to the printer 14 (S28). The printer 14 outputs the output data acquired from management server 12 (S30) and notifies the management server 12 of completion of the output of the recommendation information (S32). The management server 12 updates the issue information 34 and changes the flag of the recommendation information for which notification has been provided by the printer 14, from "unissued" to "issued" (S34) .

If there is no stock of the product at S24 (N at S24), the management server 12 may repeat the process of S18 through S22 until a product in stock and a store having the product are identified. If any product in stock and store having the product cannot be identified after the process of S18 through S22 is repeated a predetermined number of times, the management server 12 may stop the processing and notify the printer 14 of the fact that the generation of recommendation information is stopped.

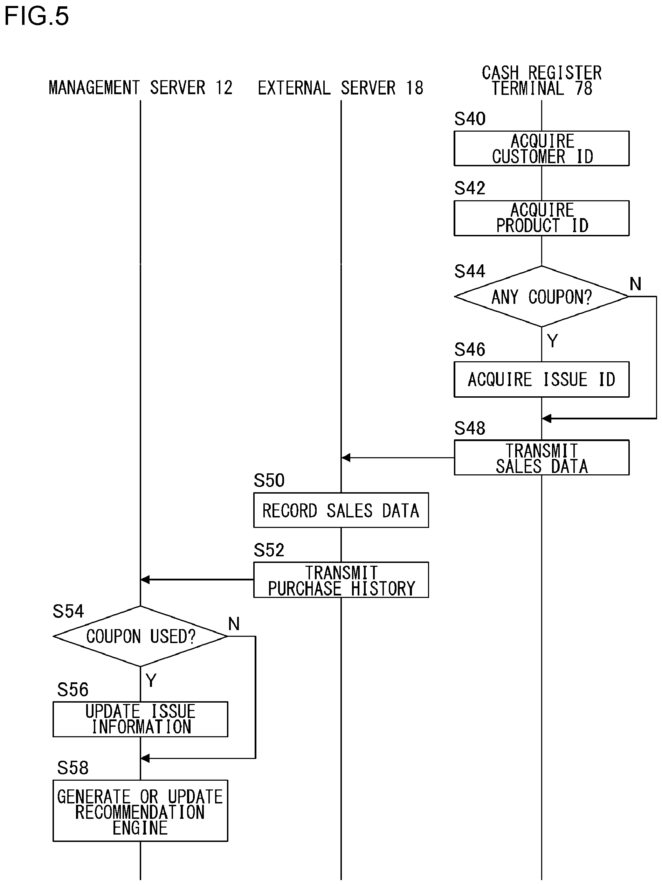

FIG. 5 is a sequential diagram that shows another example of the operation performed by the printer system 10 and shows the flow of processing for generating a recommendation engine. The cash register terminal 78 performs sales processing to sell a product to a customer. The cash register terminal 78 reads a customer card 52 presented by a customer to acquire a customer ID (S40). The cash register terminal 78 also reads the bar code of the product that the customer is purchasing and acquires a product ID (S42). If the customer has a coupon 56 (Y at S44), the cash register terminal 78 will read the two-dimensional code 97 of the coupon 56 to acquire an issue ID (S46). If the customer does not have the coupon 56 (N at S44), the process of S46 will be skipped. When the sale processing at the cash register terminal 78 is completed, the cash register terminal 78 transmits sales data to an external server 18 (S48) .

The external server 18 records, as the history information 74, the sales data acquired from the cash register terminal 78 and updates the stock information 76 based on the sales data (S50). The external server 18 transmits purchase history data to the management server 12 (S52). At S52, the external server 18 may transmit the purchase history data to the management server 12 upon request from the management server 12. The management server 12 acquires the purchase history data from the external server 18 and, if the purchase history data includes use history of the coupon 56 (Y at S54), the management server 12 will update the issue information 34 and change the flag of the used recommendation information from "issued" to "used" (S56). If the purchase history data does not include the use history of the coupon 56 (N at S54), the management server 12 will skip the process of S56. The management server 12 analyzes the acquired purchase history data and generates or updates the recommendation engine (S58). When the management server 12 acquires customer identification information from the printer 14, the management server 12 uses the updated recommendation engine to generate new recommendation information, according to the sequence in FIG. 4.

According to the present embodiment, since recommendation information including position information is output, the convenience of a customer who is to obtain a product or service according to the recommendation information can be enhanced. Also, according to the present embodiment, since a product or service that is in stock or scheduled to be available is set as a product or service to be recommended, the possibility of being unable to obtain the product or service due to being out of stock or unavailable for reservation can be reduced. Also, according to the present embodiment, since the recommendation information is generated based on the action history information on a customer's actions in multiple stores within a facility, a rich variety of recommendation information can be provided. For example, a product or service of a store that is different from the store where the printer 14 is installed or a product or service that is different from that provided by the store where the printer 14 is installed can be recommended, thereby providing information new to customers. From the store side, an opportunity for unusual customers to visit the store can be created, so that sales improvement can be expected. Also, by setting affiliated stores as stores to be recommended, customers can be shared among multiple affiliated stores, thereby improving sales as a whole for the multiple affiliated stores.

The present invention has been described with reference to an embodiment. It should be understood by those skilled in the art that the invention is not limited to the above-described embodiment and that various modifications could be developed on the basis of various design modifications and such modifications also fall within the scope of the present invention.

The aforementioned embodiment describes the case where the printer system 10 is installed in a specific commercial facility. In another embodiment, the printer system 10 may be installed for multiple commercial facilities. In this case, a customer may be identified by using a customer ID that can be commonly used in the multiple commercial facilities, or by relating customer IDs that are uniquely issued by the respective commercial facilities. When the printer system 10 is installed for multiple commercial facilities, the recommendation engine may be generated based on the action history information on a customer's actions in multiple stores within multiple facilities. In this case, a store within the facility that includes the store where the printer 14 is installed may be set as a store to be recommended, or a store within a different facility may be set as a store to be recommended. When a store within a different facility is set as a store to be recommended, the position information included in the recommendation information may include at least one of the position of the facility to be recommended, a detailed position (position of the store) within the facility to be recommended, and a detailed position within the store. According to the present embodiment, by setting, as a product to be recommended, a limited product offered only at a store within a specific facility, customers can be prompted to visit a facility that they do not usually use, thereby improving sales as a whole for the multiple commercial facilities.

The aforementioned embodiment describes the case where a product or service provided at a store is set as a product or service to be recommended. In another embodiment, a product or service provided in a commercial facility may be set as a product or service to be recommended. For example, when an event is held in a commercial facility, information on the event to be held, tickets to participate in the event, and vouchers for products distributed at the event may be provided as the recommendation information. When a product or service provided in a commercial facility is recommended, the use information of the recommendation may be acquired by the facility terminal 68 in the commercial facility, and the use history of the recommendation may be recorded as the customer information 60. The management server 12 may generate or update the recommendation engine based on the use history recorded as the customer information 60 and may generate new recommendation information for the customer.

The aforementioned embodiment describes the case where the coupon 56 is read and used at a cash register terminal of a store. In another embodiment, the coupon 56 may be read by the printer 14 installed in a store. In this case, the issue information 34 stored on the management server 12 may be updated based on data transmitted from the printer 14 to the management server 12. Also, when the recommendation information is stored in the customer terminal 54, an operation for using the recommendation may be performed through a browser or dedicated application running on the customer terminal 54, and the use history of the recommendation may be transmitted from the customer terminal 54 to the management server 12.

Showing example functional blocks, the aforementioned embodiment describes various functions provided by the server and the relationships among the various functions. The boundaries of the functional blocks described above are arbitrarily determined for convenience of explanation, and, as long as the various functions and the relationships among the various functions are appropriately realized, boundaries different from those of the abovementioned functional blocks may be determined. Also, the various functions provided by the server may be implemented by a single server device or may be implemented by coordination of multiple server devices. Therefore, a specific server providing a specific function includes the case where the specific function is implemented by a single server device and the case where the specific function is implemented by multiple server devices, and it does not necessarily mean that the specific function must be implemented only by the specific server.

### INDUSTRIAL APPLICABILITY

According to an embodiment of the present invention, more favorable recommendation information can be output from a printer.

### REFERENCE SIGNS LIST

- 10: printer system
- 12: management server
- 14: printer
- 16: facility server
- 17a-17c: store servers
- 18: external servers
- 20: data collection unit
- 22: data analysis unit
- 24: recommendation determining unit
- 26: output data generating unit
- 30: customer information
- 32: product information
- 34: issue information
- 36: position information
- 40: first communication unit
- 42: second communication unit
- 44: display operation unit
- 46: printing mechanism
- 48: storage unit
- 50: control unit
- 52: customer card
- 54: customer terminal
- 56: coupon

## Claims

1. A printer system, comprising:
a printer that acquires and transmits, to a server, identification information for identifying a customer and that also acquires, from the server, and outputs recommendation information for the customer; and
a server that generates and transmits, to the printer, recommendation information including position information, based on at least one of attribute information or action history information of a customer identified by identification information acquired from the printer.

2. The printer system according to claim 1, wherein the server generates and transmits, to the printer, recommendation information that includes information indicating a product or service and also includes position information regarding a position where the product or service can be obtained, based on at least one of product stock information or service schedule information.

3. The printer system according to claim 2, wherein the server generates and transmits, to the printer, recommendation information including position information that indicates at least one of a position of a store where the product or service can be obtained, a detailed position within the store where the product or service can be obtained, a position of a facility that includes the store where the product or service can be obtained, or a detailed position within the facility where the product or service can be obtained.

4. The printer system according to any one of claims 1 through 3, wherein, based on action history information on the customer's actions in a plurality of stores that use the identification information, the server generates and transmits, to the printer, recommendation information regarding a store where the printer is installed or regarding a store different from the store where the printer is installed.

5. The printer system according to any one of claims 1 through 3, wherein, based on action history information on the customer's actions in a plurality of stores within a plurality of facilities that use the identification information, the server generates and transmits, to the printer, recommendation information regarding a store within a facility that includes a store where the printer is installed, or regarding a store within a facility different from the facility that includes the store where the printer is installed.

6. The printer system according to any one of claims 1 through 5, wherein the server generates and transmits, to the printer, recommendation information regarding a store that provides a product or service that is same as a product or service provided by a store where the printer is installed, or regarding a store that provides a product or service different from a product or service provided by the store where the printer is installed.

7. The printer system according to any one of claims 1 through 6, wherein the server generates and transmits, to the printer, recommendation information regarding a store affiliated with a store where the printer is installed.

8. The printer system according to any one of claims 1 through 7, wherein, based on action history information on the customer's actions within a facility that uses the identification information, the server generates and transmits, to the printer, recommendation information regarding the facility or a store within the facility.

9. The printer system according to any one of claims 1 through 8, wherein the server generates new recommendation information based on action history information of the customer associated with recommendation information for the customer.

10. The printer system according to claim 9, wherein the server generates new recommendation information based on timing of issuance of recommendation information for the customer and timing of an action of the customer associated with the recommendation information for the customer.

11. A program causing a computer to implement:
acquiring, from a printer, identification information for identifying a customer;
generating recommendation information including position information, based on at least one of attribute information or action history information of a customer identified by the acquired identification information; and
transmitting the generated recommendation information to the printer.

12. A program causing a computer to implement:
acquiring and transmitting, to a server, identification information for identifying a customer; and
acquiring, from the server, and outputting recommendation information that includes position information for the customer.
